(19) Europäisches Patentamt / European Patent Office / Office européen des brevets

(11) **EP 2 732 497 B1**

## (12) FASCICULE DE BREVET EUROPEEN

(45) Date de publication et mention
de la délivrance du brevet:
**05.08.2015 Bulletin 2015/32**

(21) Numéro de dépôt: **12730826.0**

(22) Date de dépôt: **12.06.2012**

(51) Int Cl.:
*H01M 8/04* (2006.01)      *H01M 8/10* (2006.01)

(86) Numéro de dépôt international:
**PCT/EP2012/061055**

(87) Numéro de publication internationale:
**WO 2013/007459 (17.01.2013 Gazette 2013/03)**

### (54) PROCEDE DE DEPOLLUTION ET DE REGENERATION D'UNE ELECTRODE DE PILE A COMBUSTIBLE EMPOISONNEE PAR DES COMPOSES SOUFRES

VERFAHREN ZUR ENTGIFTUNG UND ZUR REGENERIERUNG EINER DURCH SCHWEFELVERBINDUNGEN KONTAMINIERTEN BRENNSTOFFZELLENELEKTRODE

METHOD OF DEPOLLUTION AND OF REGENERATION OF A FUEL CELL ELECTRODE POISONED BY SULPHUR COMPOUNDS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.07.2011 FR 1156379**

(43) Date de publication de la demande:
**21.05.2014 Bulletin 2014/21**

(73) Titulaires:
• **Commissariat à l'Énergie Atomique
et aux Énergies Alternatives
75015 Paris (FR)**
• **L'Air Liquide Société Anonyme pour l'Etude et
l'Exploitation des Procédés Georges Claude
75007 Paris (FR)**

(72) Inventeurs:
• **PASSOT, Sylvain
F-38210 Tullins (FR)**
• **FAURE, Christel
F-38210 Tullins (FR)**
• **FRANCO, Alejandro
F-80039 AMIENS (FR)**
• **LEMAIRE, Olivier
F-38490 Les Abrets (FR)**

(74) Mandataire: **Esselin, Sophie et al
Marks & Clerk France
Conseils en Propriété Industrielle
Immeuble Visium
22, Avenue Aristide Briand
94117 Arcueil Cedex (FR)**

(56) Documents cités:
**US-A1- 2008 026 268      US-A1- 2010 233 554**

EP 2 732 497 B1

**Description**

Le domaine de l'invention est celui des piles à combustible à membrane à échange de protons, couramment dénommées par l'acronyme « PEMFC » correspondant au terme anglais : « Proton Exchange Membrane Fuel Cell ».

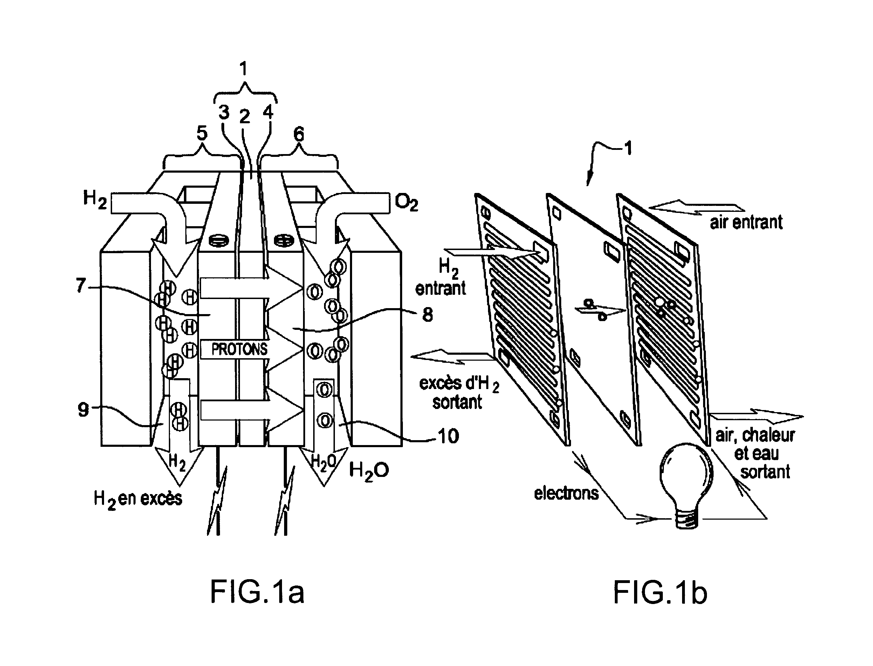

Les PEMFC sont des générateurs de courant dont le principe de fonctionnement repose sur la conversion de l'énergie chimique en énergie électrique par réaction catalytique de l'hydrogène et de l'oxygène. Les assemblages membrane-électrodes (AME), appelés communément coeurs de pile constituent les éléments de base des PEMFC. Comme représenté en figure 1 a et 1 b, le coeur de pile 1 est composé d'une membrane polymère 2, et de couches catalytiques 3, 4 présentes d'un côté et de l'autre de la membrane 2 et constituant respectivement l'anode et la cathode.

La membrane 2 permet donc de séparer les compartiments anodique 5 et cathodique 6. Les couches catalytiques 3,4 comprennent généralement des nano-particules supportées par des agrégats de carbone. Des couches de diffusion gazeuse 7,8 (tissu de carbone, feutre, ..) sont disposées de part et d'autre de l'AME 1, pour assurer la conduction électrique, la répartition homogène des gaz réactifs et de l'évacuation de l'eau produite par la réaction. Un système de canaux 9, 10 placé de chaque côté de l'AME amène les gaz réactifs et évacue vers l'extérieur l'eau et les gaz en excès.

A l'anode 3, la décomposition de l'hydrogène adsorbé sur le catalyseur produit des protons $H^+$ et des élections $e^-$. Les protons traversent ensuite la membrane polymère avant de réagir avec l'oxygène à la cathode 4.

La réaction des protons avec l'oxygène à la cathode conduit à la formation d'eau et à la production de chaleur 4.

En fonction de la méthode de production de l'hydrogène, le gaz peut comporter des impuretés. Il a été montré que le monoxyde de carbone et les composés soufrés sont particulièrement néfastes pour le fonctionnement de la pile.

Dans ce contexte, des seuils de concentrations maximales ont été proposés pour normaliser la qualité de l'hydrogène utilisé pour les piles à combustible dans le cas d'une application automobile : par exemple, 0,2 $\mu$mol/mol pour le CO et 0,004 $\mu$mol/mol pour les composés soufrés.

Le sulfure d'hydrogène ($H_2S$) est, en général, le principal composé soufré présent dans l'hydrogène. Le mécanisme d'adsorption dissociative de $H_2S$ sur le platine généralement admis est le suivant comme décrit dans l'article de M.-V. Mathieu, M. Primet, Applied Catalysis, 9 (3) 361-370 (1984). :

$$H_2S+Pt \rightarrow Pt\text{-}S+H_2 \qquad (1)$$

$$H_2S+Pt\text{-}H \rightarrow Pt\text{-}S+3/2H_2 \qquad (2)$$

L'empoisonnement des sites catalytiques se traduit par l'adsorption du soufre sur le platine (Pt-S) dont la désorption est particulièrement difficile (liaison chimique Pt-S très forte). Le soufre bloque les sites catalytiques pour la réaction d'oxydation de l'hydrogène, ce qui entraîne une augmentation de la surtension anodique de quelques dizaines de millivolts et une diminution des performances de la cellule.

Alors que le monoxyde de carbone se désorbe facilement en présence d'hydrogène pur, l'adsorption du soufre sur le platine est considérée comme partiellement réversible voire irréversible en présence d'hydrogène pur : le soufre reste accroché au platine et les performances électriques de la pile restent mauvaises. Il faut noter que la pollution par des composés soufrés côté air entraîne également une diminution partiellement réversible des performances de la pile.

Plusieurs méthodes ont été proposées pour « nettoyer » la surface du catalyseur en cas d'empoisonnement par des espèces fortement adsorbées à la surface du catalyseur et ainsi améliorer les performances électriques de la pile à combustible, afin d'améliorer les performances d'une pile après une phase de pollution par des composés soufrés.

1) Une première méthode utilise la voltampérométrie cyclique :

Il a ainsi été proposé de nettoyer la surface du catalyseur en effectuant un ou plusieurs cycles de voltampérométrie cyclique sur l'anode comme décrit dans : F.H. Garzon, T. Rockward, I.G. Urdampilleta, E.L. Brosha, F.A. Uribe, ECS Trans., 3 (1) 695-703 (2006). La réalisation de voltampérométrie cyclique permet d'atteindre un potentiel anodique suffisamment haut (typiquement un potentiel compris entre 0,9V et 1,3V) pour oxyder le soufre dont l'une des réactions possibles est :

$$Pt - S + 4H_2O \leftrightarrow SO_4^{2-} + 8H^+ + 6e^- + Pt \qquad (3)$$

Cette méthode nécessite néanmoins l'utilisation d'un générateur externe pour pouvoir appliquer le balayage en potentiel. Un tel générateur n'est pas nécessairement présent dans les systèmes réels.

2) Une seconde méthode de l'art connu utilise l'impulsion de puissance :

Cette solution consiste à appliquer une impulsion de courte durée pour atteindre le potentiel nécessaire à l'oxydation de la couche de soufre (3). Cette solution a été récemment brevetée par le Los Alamos National Laboratory et notamment décrit dans l'article : F.A. Uribe, T.Q.T. Rockward, *Cleaning (de-poisining) PEMFC electrodes from strongly adsorbed species on the catalyst surface.* US 20060249399 A1. 2006.. Cette impulsion peut être d'une durée de 20 secondes, à 30 A et 1,4V. Dans cette solution, les inventeurs travaillent en mode potentiostatique, c'est-à-dire que la tension de cellule est fixée et que la densité de courant évolue en fonction du temps. Ils proposent:

- soit d'interrompre totalement le flux d'hydrogène en maintenant la différence de potentiels dans le but d'oxyder l'hydrogène encore présent avant de déconnecter la pile à combustible et d'appliquer l'impulsion pour oxyder les composés soufrés,
- soit de diminuer le flux d'hydrogène et d'appliquer une impulsion plus importante pour oxyder l'hydrogène ainsi que les composés soufrés.

De même que pour la solution précédente, cette solution nécessite l'usage d'une source de puissance externe. Cette solution est présentée dans le cas d'un fonctionnement du système en potentiostatique.

3) Une troisième solution utilise le passage à l'OCV (Open-Circuit Voltage = courant nul) :

Il a également été proposé de mettre la cellule à l'OCV, c'est-à-dire d'arrêter l'alimentation de la pile pour récupérer les performances après un empoisonnement par du sulfure d'hydrogène comme décrit dans les articles : I.G. Urdampilleta, F.A. Uribe, T. Rockward, E.L. Brosha, B.S. Pivovar, F.H. Garzon, ECS Trans., 11 (1) 831-842 (2007) et D. Imamura, Y. Hashimasa, ECS Trans., 11 (1) 853-862 (2007). L'empoisonnement par $H_2S$ est suivi d'une phase de retour sous hydrogène pur, puis d'une phase à l'OCV pendant plusieurs heures pour permettre une récupération des performances. Le passage à l'OCV pendant plusieurs heures semble permettre la désorption des composés soufrés. Cette solution correspond à un fonctionnement en galvanostatique. L'empoisonnement intervient à un courant fixé, les potentiels des électrodes et la tension de cellule évoluent en conséquent.

4) Une quatrième solution consiste à régénérer l'anode en réduisant le flux en combustible et donc en diminuant le coefficient stoechiométrique de manière à pouvoir oxyder l'espèce polluante. Une telle solution a notamment été décrite dans les demandes de brevet US2008/0026268 et US 2010/0233554.

De manière générale, l'empoisonnement d'une électrode par des composés par exemple soufrés conduit à la formation d'une couche de soufre à la surface du catalyseur qui ne peut être oxydé qu'à un haut potentiel d'électrode, suivant une des réactions possible telle que la réaction (3).

Côté anode, la réaction globale d'oxydation de l'hydrogène est la suivant :

$$H_2 \rightarrow 2H^+ + 2e^- \qquad (4)$$

Une molécule d'hydrogène produit donc 2 protons et 2 électrons. Le flux d'hydrogène nécessaire pour établir un courant *I* (en A) répond à l'équation suivante :

$$Q_{H_2}(mol\ s^{-1}) = \frac{I}{2 \times F} \qquad (5)$$

avec F la constante de Faraday (en A.s.mol$^{-1}$).

Dans les systèmes de piles à combustibles, l'hydrogène à l'anode et l'air (ou oxygène) à la cathode sont très souvent injectés en excès (fonctionnement en mode sur-stoechiométrique). Le flux d'hydrogène nécessaire à l'établissement du courant est donc multiplié par le coefficient stoechiométrique $St_{H_2}$ :

$$Q_{H_2}(mol\ s^{-1}) = St_{H_2} \times \frac{I}{2 \times F} \qquad (6)$$

Le coefficient stoechiométrique correspondant à l'excès de gaz injecté.

En travaillant à densité de courant constant, la diminution du coefficient stoechiométrique d'hydrogène en dessous de l'unité signifie que le flux d'hydrogène ne sera plus suffisant pour fournir la quantité d'électrons nécessaire au maintien du courant à sa valeur de consigne. Ainsi, dans un premier temps, le courant est maintenu par l'oxydation de l'hydrogène présent. Ensuite, l'hydrogène étant en quantité insuffisante, le potentiel anodique augmente. Toujours dans le but de maintenir le courant constant, d'autres mécanismes réactionnels que la réaction d'oxydation de l'hydrogène, sont sollicités. Ces autres mécanismes, par exemple la réaction (3) qui est l'oxydation du soufre adsorbé à la surface du platine pour former de l'acide sulfurique, sont rendus possible grâce à l'augmentation du potentiel, conduisant à la régénération de l'anode qui avait été au préalable polluée.

Néanmoins, le Demandeur a observé, que durant la période de régénération de l'anode, le fonctionnement à la cathode était altéré avec une chute du potentiel à la cathode, pouvant être due à des phénomènes de corrosion de la cathode et ce en raison notamment de surabondance d'eau produite en phase de régénération.

Pour pallier ce phénomène, la présente invention propose un procédé optimisé de dépollution et de régénération.

Plus précisément l'invention a pour objet un procédé de dépollution et de régénération d'une électrode catalytique de pile à combustible, la réaction du combustible de la pile et la capture d'au moins une espèce polluante se produisant sur ladite électrode catalytique, caractérisé en ce qu'il comporte les étapes suivantes :

- la diminution à densité de courant constante dite première densité de courant de référence, du flux de combustible par rapport à un flux nominal de combustible, pendant une première durée conduisant à une valeur du coefficient stoechiométrique dudit combustible inférieure à 1, de manière à augmenter le potentiel d'oxydation de ladite électrode catalytique et à atteindre le potentiel d'oxydation de ladite espèce polluante, pour l'éliminer ;
- la coupure du courant pendant une durée dite de coupure ;
- l'augmentation du flux de combustible au-delà du flux nominal conduisant à nouveau à une valeur du coefficient stoechiométrique supérieure ou égale à 1 ;
- l'augmentation de la densité de courant jusqu'à atteindre environ une seconde densité de courant choisie par l'opérateur pouvant être identique ou différente de la densité de courant de référence initiale.

Selon une variante de l'invention, le procédé comprend le passage à courant nul déclenché par l'observation d'une baisse de densité de courant, pouvant être par exemple de 10%.

Selon une variante de l'invention, le procédé comprend le passage à courant nul déclenché par le contrôle des potentiels.

Selon une variante de l'invention, la durée dite de coupure est de l'ordre de quelques minutes.

Selon une variante de l'invention, l'augmentation de la densité de courant jusqu'à atteindre environ ladite seconde densité de courant est réalisée progressivement.

Selon une variante de l'invention, l'augmentation de la densité de courant jusqu'à atteindre environ ladite seconde densité de courant est réalisée par atteinte de paliers successifs.

Selon une variante de l'invention, le combustible est à base d'hydrogène, l'électrode catalytique étant à base de métal noble.

Selon une variante de l'invention, le métal noble est du platine ou du palladium ou du ruthénium.

Selon une variante de l'invention, le combustible est à base d'hydrogène pur.

Selon une variante de l'invention, le combustible est à base d'hydrogène réformé.

Selon une variante de l'invention, l'électrode catalytique comprend des nano-particules de platine supportées par des agrégats de carbone.

Selon une variante de l'invention, l'espèce polluante est une espèce soufrée pouvant être du sulfure d'hydrogène.

Selon une variante de l'invention, la durée de diminution du flux d'hydrogène est réglée pour atteindre un potentiel anodique de l'électrode catalytique, seuil au moins supérieur à 0,9 V.

Selon une variante de l'invention, la diminution du flux d'hydrogène est maintenue durant au moins environ une minute et moins d'environ une dizaine de minutes.

Selon une variante de l'invention, l'espèce polluante est une espèce carbonée pouvant être du monoxyde de carbone.

Selon une variante de l'invention, le procédé de dépollution et de régénération d'une électrode catalytique de pile à combustible selon l'invention comprend la succession d'étapes suivantes :

- la diminution du flux de combustible depuis une valeur nominale, correspondant à une première valeur de stoechiométrie pendant une première durée, faisant passer le potentiel de ladite électrode catalytique d'une valeur initiale à une première valeur supérieure ou égale au potentiel d'oxydation de l'espèce polluante ;
- l'augmentation du flux de combustible correspondant à une seconde valeur de stoechiométrie pendant une seconde durée pour accélérer le flux du combustible vers les sites catalytiques de l'anode ;
- le retour du flux à ladite valeur nominale de fonctionnement pour la réaction du combustible à l'électrode catalytique.

Selon une variante de l'invention, la première durée et la seconde durée sont de l'ordre de quelques minutes.

Selon une variante de l'invention, la première valeur de stoechiométrie est environ égale à 0,5, la seconde valeur de stoechiométrie étant environ égale à 2.

L'invention sera mieux comprise et d'autres avantages apparaîtront à la lecture de la description qui va suivre donnée à titre non limitatif et grâce aux figures annexées parmi lesquelles :

- les figures 1 a et 1 b illustrent le schéma du principe de fonctionnement d'une pile à combustible PEMFC ;
- la figure 2 illustre l'évolution de la tension de cellule lors de l'empoisonnement par le sulfure d'hydrogène, suivi d'une phase de retour sous hydrogène pur, d'une phase de caractérisations et d'une phase sous hydrogène pur avec régénération de l'électrode anodique selon le procédé de l'invention ;
- la figure 3 illustre l'évolution du potentiel anodique pendant la régénération de l'électrode anodique selon le procédé de l'invention;
- la figure 4 illustre l'évolution de la tension de cellule pendant la régénération de l'électrode anodique selon le procédé de l'invention ;
- les figures 5a et 5b illustrent les évolutions de potentiel Ec à la cathode, respectivement lorsqu'une coupure de courant n'est pas imposée et lorsqu'une coupure de courant est imposée dans le cadre de l'invention.

La présente invention est décrite ci-après dans le cadre d'une pile à combustible à membrane à échange de protons sans que cela ne représente une limitation de l'invention.

Comme décrit précédemment, l'empoisonnement d'une électrode par des composés soufrés conduit à la formation d'une couche de soufre à la surface du catalyseur qui ne peut être oxydé qu'à un haut potentiel d'électrode, suivant une des réactions possible telle que la réaction (3).

Il est proposé dans l'invention, d'agir sur le flux d'hydrogène, via le coefficient stoechiométrique $St_{H_2}$.

Côté anode, la réaction globale d'oxydation de l'hydrogène est la suivant :

$$H_2 \rightarrow 2H^+ + 2e^- \qquad (4)$$

Une molécule d'hydrogène produit donc 2 protons et 2 électrons. Le flux d'hydrogène nécessaire pour établir un courant **I** (en A) répond à l'équation suivante :

$$Q_{H_2}(mol\ s^{-1}) = \frac{I}{2 \times F} \qquad (5)$$

avec F la constante de Faraday (en A.s.mol$^{-1}$).

Dans les systèmes de piles à combustibles, l'hydrogène à l'anode et l'air (ou oxygène) à la cathode sont très souvent injectés en excès (fonctionnement en mode sur-stoechiométrique). Le flux d'hydrogène nécessaire à l'établissement du courant est donc multiplié par le coefficient stoechiométrique $St_{H_2}$ :

$$Q_{H_2}(mol\ s^{-1}) = St_{H_2} \times \frac{I}{2 \times F} \qquad (6)$$

Le coefficient stoechiométrique correspondant à l'excès de gaz injecté.

En travaillant à densité de courant constant, la diminution du coefficient stoechiométrique d'hydrogène en dessous de l'unité signifie que le flux d'hydrogène ne sera plus suffisant pour fournir la quantité d'électrons nécessaire au maintien du courant à sa valeur de consigne. Ainsi, dans un premier temps, le courant est maintenu par l'oxydation de l'hydrogène présent. Ensuite, l'hydrogène étant en quantité insuffisante, le potentiel anodique augmente. Toujours dans le but de maintenir le courant constant, d'autres mécanismes réactionnels que la réaction d'oxydation de l'hydrogène, sont sollicités. Ces autres mécanismes, par exemple la réaction (3) qui est l'oxydation du soufre adsorbé à la surface du platine pour former de l'acide sulfurique, sont rendus possible grâce à l'augmentation du potentiel.

Ainsi la solution de la présente invention n'utilise pas de source de puissance externe contrairement à certaines des solutions de l'art connu et ne nécessite pas l'arrêt de la pile pour oxyder le soufre.

Dans le cas présent, il s'agit de travailler en mode galvanostatique, c'est-à-dire à densité de courant fixée, les potentiels des électrodes et donc la tension de cellule évoluent en fonction du temps. Ainsi, à une densité de courant fixée, la diminution du flux d'hydrogène entraine l'augmentation du potentiel anodique (et la diminution du potentiel cathodique), ce qui permet l'oxydation des composés soufrés. En mode potentiostatique, la diminution du flux d'hydrogène entraine seulement la diminution de la densité de courant, la tension de cellule (donc les potentiels) restant la même, les composés soufrés ne sont donc pas oxydés et il faut appliquer une impulsion électrique avec une charge électrique extérieure.

Selon la présente invention, il convient de procéder à la diminution du flux d'hydrogène à une stoechiométrie en dessous de l'unité (coefficient stoechiométrique entre 0 et 1) et ce pendant une certaine première durée. Typiquement, une durée nécessaire peut se situer entre 1 et 10 minutes pour atteindre un potentiel anodique au moins supérieur à 0,9 V - 1,1 V.

En effet, cette première durée d'application doit être suffisamment courte pour ne pas solliciter trop d'autres mécanismes réactionnels qui pourraient dégrader l'électrode (par exemple la corrosion du carbone, l'électrolyse de l'eau...) et suffisamment longue pour oxyder l'ensemble des espèces soufrés adsorbés sur le catalyseur.

Selon la présente invention, il est proposé ensuite de suivre le protocole d'étapes suivant :

- le passage à courant nul ;
- le maintien à courant nul pendant une durée supérieure à 30 secondes, et de préférence de l'ordre de 5 minutes ;
- l'augmentation du coefficient stoechiométrique en flux d'hydrogène à une valeur supérieure à 1 ;
- l'augmentation de la densité de courant jusqu'à la valeur de densité de courant dite de référence précédant la procédure de régénération.

Le passage à courant nul, peut être déclenché lors de l'observation d'une diminution de la densité de courant (typiquement cela peut être après une baisse d'environ 10% de la valeur de densité de courant dite de référence) ou par le contrôle des potentiels.

Selon cette seconde alternative, il peut être intéressant d'utiliser un dispositif de contrôle-commande sur le potentiel pour optimiser de manière dynamique les différentes durées à respecter avant de ré-augmenter le flux d'hydrogène. Ce dispositif peut être par exemple décrit de la sorte et ce dans le cadre d'un dispositif complet équipé de systèmes de capteur et d'alarme et comprendre les différentes étapes suivantes :

Etape E1 : la désactivation des alarmes mises en place avant de commencer cette procédure de régénération pour éviter toute mise en défaut du système à cause de la procédure prévue selon la présente invention, ces alarmes peuvent typiquement concerner la sécurité sur les tensions et sur le flux d'hydrogène.
Etape E2 : l'acquisition de la valeur de la tension de cellule.
Etape E3 : la diminution du coefficient stoechiométrique nominal d'hydrogène pour passer à une valeur inférieure à 1.
Etape E4 : la coupure du courant, permettant d'arrêter le fonctionnement de la pile et de régénérer également la cathode
Etape E5: l'augmentation du coefficient stoechiométrique d'hydrogène pour repasser à une valeur supérieure à 1.
Etape E6 : le maintien du flux de $H_2$ en sur-stoechiométrie tant que la tension de cellule n'est pas au moins égale à sa valeur d'avant régénération, valeur acquise en étape E2.
Etape E7 : le retour du coefficient stoechiométrique d'hydrogène à sa valeur nominale (valeur avant modification en étape E3).
Etape E8 : la réactivation des sécurités désactivées en étape E1.

L'opération de diminution du flux d'hydrogène peut être réalisée une ou plusieurs fois de manière à récupérer totalement les performances de la cellule.

Il est à noter que ce procédé peut être appliqué en présence d'hydrogène pur ou en présence d'hydrogène comportant des impuretés comme l'hydrogène reformé.

Exemple de test réalisé selon le procédé de dépollution et de régénération de l'invention.

Une pile à combustible à membrane à échange de protons hydrogène a été testée durant 50 heures et un empoisonnement par 45 ppb d'$H_2S$ a conduit à la perte de 110 mV, soit 17 % de la tension de cellule.

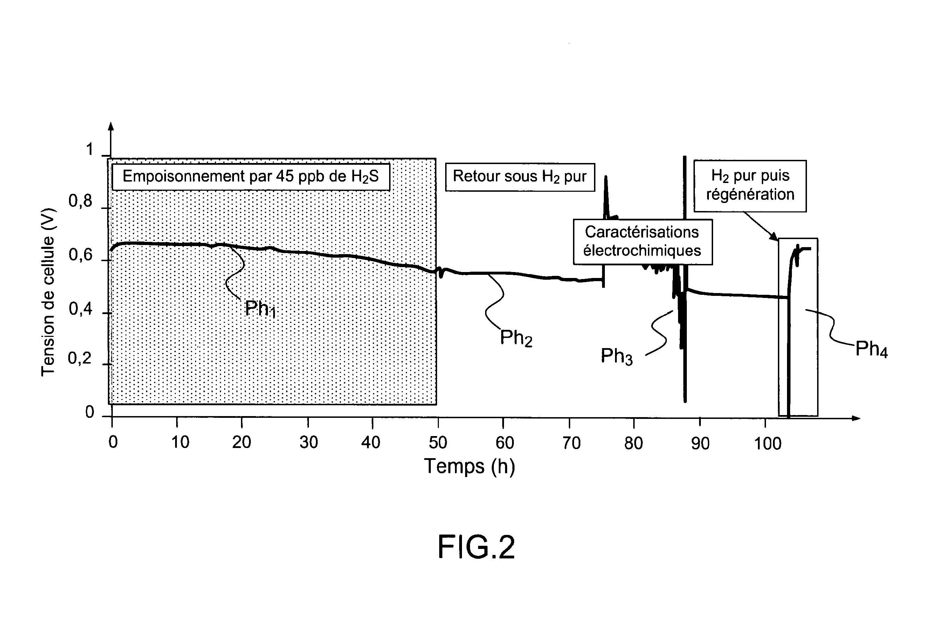

La figure 2 illustre à cet effet l'évolution de la tension de la cellule lors de l'empoisonnement par le sulfure d'hydrogène : phase Ph1, suivie d'une phase de retour sous hydrogène pur : phase Ph2, d'une phase de caractérisations : phase Ph3, et d'une phase sous hydrogène pur avec régénération : phase Ph4.

Le retour sous hydrogène pur pendant 25 heures n'entraine pas une amélioration des performances, mais une dégradation des performances ralentie. Cette phase est suivie d'une phase de caractérisations électrochimiques.

Dans cet exemple de réalisation, la cellule de test est instrumentée d'une électrode de référence ERH (Electrode Réversible à Hydrogène) pour permettre la mesure des potentiels anodique et cathodique. L'hydrogène alimentant cette ERH est fourni par une cellule d'électrolyse de l'eau permettant d'assurer la pureté de l'hydrogène.

Dans le but d'observer une augmentation du potentiel anodique, la stoechiométrie d'hydrogène est diminuée par exemple de moitié ($St_{H2}$ = 0,5) de manière à se trouver en sous-stoechiométrie ($0 < St_{H2} < 1$) pendant une courte durée, par exemple 3 minutes, en gardant la densité de courant à 0,6 A cm$^{-2}$. Cette durée doit être suffisamment courte pour ne par dégrader les matériaux de la cellule et suffisamment longue pour permettre l'augmentation du potentiel anodique de toutes les cellules dans le cas d'un stack, correspondant à un empilement de cellules élémentaires. Cette durée peut être optimisée de manière dynamique par le dispositif de contrôle commande et avec une condition sur le potentiel anodique. Dans le cas de l'absence d'une électrode de référence, cette durée est fixée par l'opérateur.

Il est observé que cette diminution du flux d'hydrogène entraine une brève augmentation du potentiel anodique jusqu'à environ 2 V.

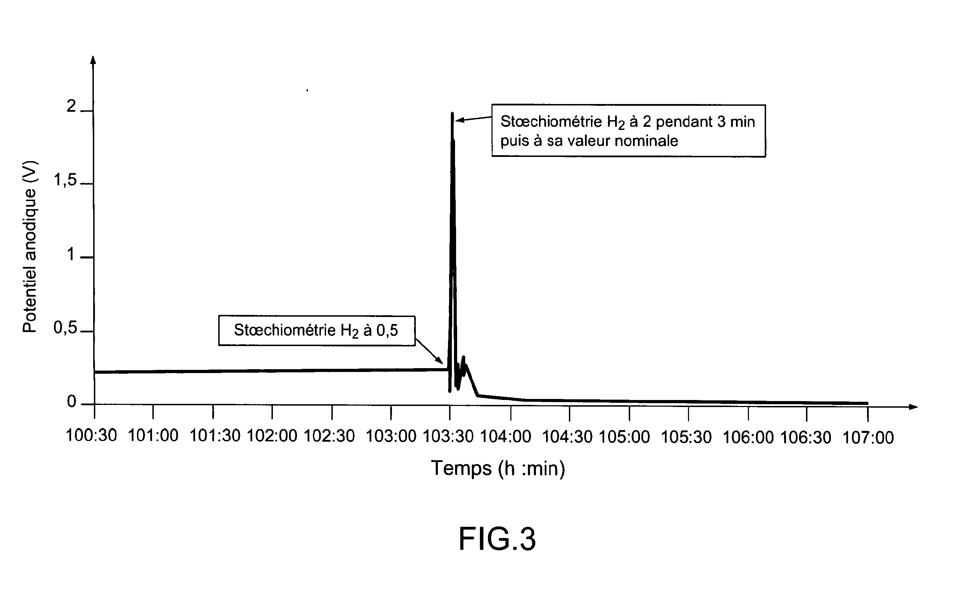

La figure 3 illustre l'évolution du potentiel anodique pendant la régénération de l'électrode qui met en évidence la phase à coefficient stoechiométrique $St_{H2} = 0,5$, suivie de la phase à coefficient stoechiométrique $St_{H2} = 2$, avant retour du coefficient à une valeur nominale.

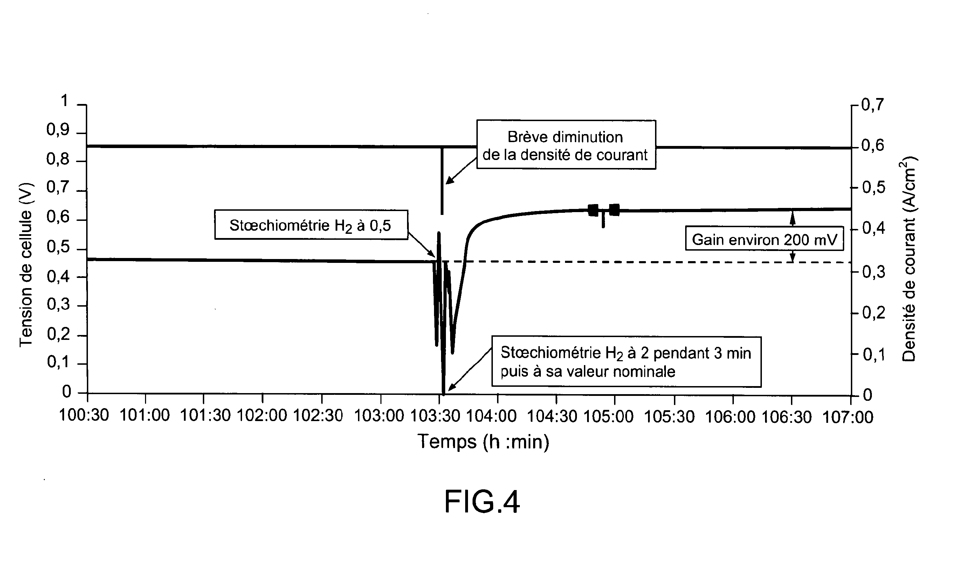

Pendant cette brève augmentation du potentiel anodique, la densité de courant ne peut être maintenue par la charge à cause du manque d'hydrogène, ce qui entraîne une brève diminution de la densité de courant pendant moins d'une minute comme le montre la figure 4 qui illustre l'évolution de la tension de cellule pendant la régénération de l'électrode.

Selon la présente invention, lors de ce phénomène, on impose un courant nul et ce pendant une durée dite de coupure.

La stoechiométrie d'hydrogène est alors augmentée fortement par exemple à 2 pour être en sur-stoechiométrie ($St_{H2} > 1$) pendant une période suffisamment courte pour ne pas consommer trop d'hydrogène mais aussi suffisamment longue pour accélérer le retour de l'hydrogène près des sites catalytiques et donc permettre le retour à un fonctionnement normal rapidement. Cette période peut durer par exemple 3 minutes.

La stoechiométrie est ensuite ramenée à sa valeur nominale (supérieure à 1).

Il est ainsi observé de manière inattendue que la tension de cellule a augmenté jusqu'à une valeur supérieure à la tension mesurée avant diminution du flux.

Le procédé de régénération de la présente invention permet donc l'obtention d'un gain en tension d'environ 200 mV soit une récupération de 97 % de la valeur initiale de la tension de cellule.

Ces tests valident l'efficacité du procédé de l'invention conduisant à un gain en tension et prouvent que l'augmentation du potentiel anodique générée par la diminution du flux d'hydrogène permet effectivement l'oxydation des composés soufrés adsorbés à la surface du catalyseur et donc la dépollution de l'anode.

L'observation de la diminution de la densité de courant confirme cette explication. En effet, à cause du manque d'hydrogène, la charge ne peut plus maintenir la densité de courant à sa valeur de consigne, ce qui implique la sollicitation d'autres mécanismes réactionnels tels que l'oxydation du soufre adsorbé.

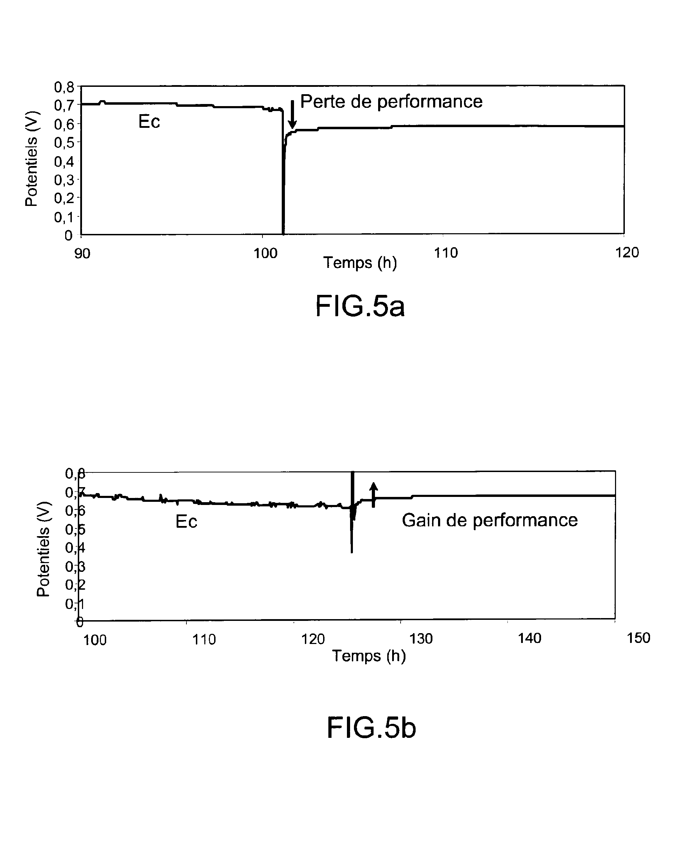

Les figures 5a et 5b mettent en évidence les évolutions de potentiels à la cathode Ec, respectivement lorsqu'une coupure de courant n'est pas imposée (figure 5a) et lorsqu'une coupure de courant est imposée dans le cadre de l'invention, (figure 5b).

Il apparait ainsi un gain de performance du potentiel Ec grâce à l'opération de coupure de courant.

**Revendications**

1. Procédé de dépollution et de régénération d'une électrode catalytique de pile à combustible, la réaction du combustible de la pile et la capture d'au moins une espèce polluante se produisant sur ladite électrode catalytique, **caractérisé en ce qu'**il comporte les étapes suivantes :

   - la diminution à densité de courant constante dite première densité de courant de référence, du flux de combustible par rapport à un flux nominal de combustible, pendant une première durée conduisant à une valeur du coefficient stoechiométrique ($StH_2$) dudit combustible inférieure à 1, de manière à augmenter le potentiel d'oxydation de ladite électrode catalytique et à atteindre le potentiel d'oxydation de ladite espèce polluante, pour l'éliminer ;
   - la coupure du courant pendant une durée dite de coupure ;
   - l'augmentation du flux au-delà du flux nominal conduisant à nouveau à une valeur du coefficient stoechiométrique supérieure ou égale à 1;
   - l'augmentation de la densité de courant jusqu'à atteindre une seconde densité de courant choisie par l'opérateur, pouvant être identique ou différente de la densité de courant de référence initiale.

2. Procédé de dépollution et de régénération d'une électrode catalytique de pile à combustible selon la revendication 1, **caractérisé en ce qu'**il comprend le passage à courant nul déclenché par l'observation d'une baisse de densité de courant, pouvant être par exemple de 10%.

3. Procédé de dépollution et de régénération d'une électrode catalytique de pile à combustible selon la revendication 1, **caractérisé en ce qu'**il comprend le passage à courant nul déclenché par le contrôle des potentiels.

4. Procédé de dépollution et de régénération d'une électrode catalytique de pile à combustible selon l'une des revendications 1 à 3, **caractérisé en ce que** la durée dite de coupure est de l'ordre de quelques minutes.

5. Procédé de dépollution et de régénération d'une électrode catalytique de pile à combustible selon l'une des revendications 1 à 4, **caractérisé en ce que** l'augmentation de la densité de courant jusqu'à atteindre environ ladite seconde densité de courant est réalisée progressivement.

6. Procédé de dépollution et de régénération d'une électrode catalytique de pile à combustible selon l'une des revendications 1 à 4, **caractérisé en ce que** l'augmentation de la densité de courant jusqu'à atteindre environ ladite seconde densité de courant est réalisée par atteinte de paliers successifs.

7. Procédé de dépollution et de régénération d'une électrode catalytique de pile à combustible selon l'une des revendications 1 à 6, **caractérisé en ce que** le combustible est à base d'hydrogène, l'électrode catalytique étant à base de métal noble.

8. Procédé de dépollution et de régénération d'une électrode catalytique selon la revendication 7, **caractérisé en ce que** le métal noble est du platine ou du palladium ou du ruthénium.

9. Procédé de dépollution et de régénération d'une électrode catalytique selon l'une des revendications 7 ou 8, **caractérisé en ce que** le combustible est à base d'hydrogène pur.

10. Procédé de dépollution et de régénération d'une électrode catalytique selon l'une des revendications 7 ou 8, **caractérisé en ce que** le combustible est à base d'hydrogène réformé.

11. Procédé de dépollution et de régénération d'une électrode catalytique de pile à combustible selon l'une des revendications 7 à 10, **caractérisé en ce que** l'électrode catalytique comprend des nano-particules de platine supportées par des agrégats de carbone.

12. Procédé de dépollution et de régénération d'une électrode catalytique de pile à combustible selon l'une des revendications 7 à 11, **caractérisé en ce que** l'espèce polluante est une espèce soufrée pouvant être du sulfure d'hydrogène.

13. Procédé de dépollution et de régénération d'une électrode catalytique de pile à combustible selon la revendication 12, **caractérisé en ce que** la durée de diminution du flux d'hydrogène est réglée pour atteindre un potentiel anodique de l'électrode catalytique, seuil au moins supérieur à 0,9 V.

14. Procédé de dépollution et de régénération d'une électrode catalytique de pile à combustible selon la revendication 13, **caractérisé en ce que** la diminution du flux d'hydrogène est maintenu durant au moins environ une minute et moins d'environ une dizaine de minutes.

15. Procédé de dépollution et de régénération d'une électrode catalytique de pile à combustible selon l'une des revendications 7 à 11, **caractérisé en ce que** l'espèce polluante est une espèce carbonée pouvant être du monoxyde de carbone.

16. Procédé de dépollution et de régénération d'une électrode catalytique de pile à combustible selon l'une des revendications précédentes, **caractérisé en ce qu'**il comprend la succession d'étapes suivantes :

    - la diminution du flux de combustible depuis une valeur nominale, correspondant à une première valeur de stoechiométrie pendant une première durée, faisant passer le potentiel de ladite électrode catalytique d'une valeur initiale à une première valeur supérieure ou égale au potentiel d'oxydation de l'espèce polluante ;
    - l'augmentation du flux de combustible correspondant à une seconde valeur de stoechiométrie pendant une seconde durée pour accélérer le flux du combustible vers les sites catalytiques de l'anode ;
    - le retour du flux à ladite valeur nominale de fonctionnement pour la réaction du combustible à l'électrode catalytique.

17. Procédé de dépollution et de régénération d'une électrode catalytique de pile à combustible selon la revendication 16, **caractérisé en ce que** la première durée et la seconde durée sont de l'ordre de quelques minutes.

18. Procédé de dépollution et de régénération d'une électrode catalytique de pile à combustible selon l'une des revendications 16 ou 17, **caractérisé en ce que** la première valeur de stoechiométrie est environ égale à 0,5, la seconde valeur de stoechiométrie étant environ égale à 2.

**Patentansprüche**

1. Verfahren zur Entgiftung und zur Regenerierung einer katalytischen Brennstoffzellenelektrode, wobei die Reaktion des Brennstoffs der Zelle und der Einfang mindestens einer kontaminierenden Spezies auf der katalytischen Elektrode erfolgt, **dadurch gekennzeichnet, dass** es die folgenden Schritte umfasst:

- das Verringern des Brennstoffflusses im Verhältnis zum einem nominalen Brennstofffluss bei als erste Referenzstromdichte bezeichneter konstanter Stromdichte während einer ersten Dauer, was zu einem Wert des stöchiometrischen Koeffizienten (StH$_2$) des Brennstoffs unter 1 führt, so dass das Oxidationspotential der katalytischen Elektrode erhöht und das Oxidationspotential der kontaminierenden Spezies erreicht wird, um sie zu entfernen,
- das Unterbrechen des Stroms während einer Unterbrechungsdauer,
- das Erhöhen des Flusses über den nominalen Fluss hinaus, was erneut zu einem Wert des stöchiometrischen Koeffizienten von über oder gleich 1 führt,
- das Erhöhen der Stromdichte bis zum Erreichen einer vom Bediener gewählten zweiten Stromdichte, die mit der Ausgangs-Referenzstromdichte identisch sein kann oder sich von ihr unterscheiden kann.

2. Verfahren zur Entgiftung und zur Regenerierung einer katalytischen Brennstoffzellenelektrode nach Anspruch 1, **dadurch gekennzeichnet, dass** es, ausgelöst durch das Stattfinden eines Abfalls der Stromdichte, der beispielsweise 10 % betragen kann, den Übergang zu Strom Null umfasst.

3. Verfahren zur Entgiftung und zur Regenerierung einer katalytischen Brennstoffzellenelektrode nach Anspruch 1, **dadurch gekennzeichnet, dass** es den Übergang zu Strom Null, ausgelöst durch die Kontrolle der Potentiale, umfasst.

4. Verfahren zur Entgiftung und zur Regenerierung einer katalytischen Brennstoffzellenelektrode nach einem der Ansprüche 1 bis 3, **dadurch gekennzeichnet, dass** die Unterbrechungsdauer einige Minuten beträgt.

5. Verfahren zur Entgiftung und zur Regenerierung einer katalytischen Brennstoffzellenelektrode nach einem der Ansprüche 1 bis 4, **dadurch gekennzeichnet, dass** die Erhöhung der Stromdichte bis zum ungefähren Erreichen der zweiten Stromdichte schrittweise erfolgt.

6. Verfahren zur Entgiftung und zur Regenerierung einer katalytischen Brennstoffzellenelektrode nach einem der Ansprüche 1 bis 4, **dadurch gekennzeichnet, dass** die Erhöhung der Stromdichte bis zum ungefähren Erreichen der zweiten Stromdichte stufenweise erfolgt.

7. Verfahren zur Entgiftung und zur Regenerierung einer katalytischen Brennstoffzellenelektrode nach einem der Ansprüche 1 bis 6, **dadurch gekennzeichnet, dass** der Brennstoff auf der Basis von Wasserstoff ist, wobei die katalytische Elektrode auf der Basis von Edelmetall ist.

8. Verfahren zur Entgiftung und zur Regenerierung einer katalytischen Elektrode nach Anspruch 7, **dadurch gekennzeichnet, dass** das Edelmetall Platin oder Palladium oder Ruthenium ist.

9. Verfahren zur Entgiftung und zur Regenerierung einer katalytischen Elektrode nach einem der Ansprüche 7 oder 8, **dadurch gekennzeichnet, dass** der Brennstoff auf der Basis reinen Wasserstoffs ist.

10. Verfahren zur Entgiftung und zur Regenerierung einer katalytischen Elektrode nach einem der Ansprüche 7 oder 8, **dadurch gekennzeichnet, dass** der Brennstoff auf der Basis reformierten Wasserstoffs ist.

11. Verfahren zur Entgiftung und zur Regenerierung einer katalytischen Brennstoffzellenelektrode nach einem der Ansprüche 7 bis 10, **dadurch gekennzeichnet, dass** die katalytische Elektrode von Kohlenstoffaggregaten gestützte Platin-Nanopartikel umfasst.

12. Verfahren zur Entgiftung und zur Regenerierung einer katalytischen Brennstoffzellenelektrode nach einem der Ansprüche 7 bis 11, **dadurch gekennzeichnet, dass** die kontaminierende Spezies eine Schwefelspezies ist, die Hydrogensulfid sein kann.

13. Verfahren zur Entgiftung und zur Regenerierung einer katalytischen Brennstoffzellenelektrode nach Anspruch 12, **dadurch gekennzeichnet, dass** die Dauer der Verringerung des Wasserstoffflusses geregelt ist, um ein Grenzwert-Anodenpotential der katalytische Elektrode mindestens über 0,9 V zu erreichen.

14. Verfahren zur Entgiftung und zur Regenerierung einer katalytischen Brennstoffzellenelektrode nach Anspruch 13, **dadurch gekennzeichnet, dass** die Verringerung des Wasserstoffflusses mindestens zirka eine Minute und weniger als zirka zehn Minuten aufrechterhalten wird.

15. Verfahren zur Entgiftung und zur Regenerierung einer katalytischen Brennstoffzellenelektrode nach einem der Ansprüche 7 bis 11, **dadurch gekennzeichnet, dass** die kontaminierende Spezies eine Kohlenstoffspezies ist, die Kohlenmonoxid sein kann.

16. Verfahren zur Entgiftung und zur Regenerierung einer katalytischen Brennstoffzellenelektrode nach einem der vorangehenden Ansprüche, **dadurch gekennzeichnet, dass** es die folgende Schrittfolge umfasst:

- das Verringern des Brennstoffflusses ab einem nominalen Wert, der einem ersten Stöchiometriewert entspricht, während einer ersten Dauer, wobei sich dabei das Potential der katalytischen Elektrode von einem Anfangswert auf einen ersten Wert verändert, der größer als das Oxidationspotential der kontaminierenden Spezies ist oder diesem entspricht,
- das Erhöhen des entsprechenden Brennstoffflusses auf einen zweiten Stöchiometriewert während einer zweiten Dauer, um den Brennstofffluss zu den katalytischen Stellen der Anode zu beschleunigen,
- das Zurückkehren des Flusses auf den nominalen Betriebswert für die Reaktion des Brennstoffs an der katalytischen Elektrode.

17. Verfahren zur Entgiftung und zur Regenerierung einer katalytischen Brennstoffzellenelektrode nach Anspruch 16, **dadurch gekennzeichnet, dass** die erste Dauer und die zweite Dauer einige Minuten betragen.

18. Verfahren zur Entgiftung und zur Regenerierung einer katalytischen Brennstoffzellenelektrode nach einem der Ansprüche 16 oder 17, **dadurch gekennzeichnet, dass** der erste Stöchiometriewert zirka gleich 0,5 ist, wobei der zweite Stöchiometriewert zirka gleich 2 ist.

**Claims**

1. A method for depolluting and regenerating a catalytic fuel-cell electrode, the reaction of the fuel of the cell and capture of at least one polluting species occurring on said catalytic electrode, **characterised in that** it comprises the following steps:

- a decrease, at a constant current density called the first reference current density, in fuel flow, relative to a nominal fuel flow, for a first length of time, leading to a value for the stoichiometric coefficient ($StH_2$) of said fuel lower than 1, so as to increase the oxidation potential of said catalytic electrode and reach the oxidation potential of said polluting species, in order to eliminate it;
- a cut-off of the current for a length of time called the cut-off time;
- an increase in the flow above the nominal flow, leading, once more, to a value of the stoichiometric coefficient higher than or equal to 1;
- an increase in the current density until a second current density, chosen by the operator and possibly identical to or different from the initial reference current density, is reached.

2. The method for depolluting and regenerating a catalytic fuel-cell electrode according to Claim 1, **characterised in that** it comprises passage to zero current triggered by observation of a drop in current density, possibly, for example, of 10%.

3. The method for depolluting and degenerating a catalytic fuel-cell electrode according to Claim 1, **characterised in that** it comprises passage to zero current triggered by potential control.

4. The method for depolluting and regenerating a catalytic fuel-cell electrode according to any of Claims 1 to 3, **characterised in that** the length of time called the cut-off time is about a few minutes.

5. The method for depolluting and regenerating a catalytic fuel-cell electrode according to any of Claims 1 to 4, **characterised in that** the increase in current density until about said second current density is reached is carried out gradually.

6. The method for depolluting and regenerating a catalytic fuel-cell electrode according to any of Claims 1 to 4, **characterised in that** the increase in the current density until about said second current density is reached is carried out in successive steps.

7. The method for depolluting and regenerating a catalytic fuel-cell electrode according to any of Claims 1 to 6, **characterised in that** the fuel is hydrogen-based, the catalytic electrode being noble-metal based.

8. The method for depolluting and regenerating a catalytic electrode according to Claim 7, **characterised in that** the noble metal is platinum, palladium or ruthenium.

9. The method for depolluting and regenerating a catalytic electrode according to either of Claims 7 or 8, **characterised in that** the fuel is based on pure hydrogen.

10. The method for depolluting and regenerating a catalytic electrode according to either of Claims 7 or 8, **characterised in that** the fuel is based on reformed hydrogen.

11. The method for depolluting and regenerating a catalytic fuel-cell electrode according to any of Claims 7 to 10, **characterised in that** the catalytic electrode comprises platinum nanoparticles supported by carbon aggregates.

12. The method for depolluting and regenerating a catalytic fuel-cell electrode according to any of Claims 7 to 11, **characterised in that** the polluting species is a species that contains sulphur and possibly being hydrogen sulphide.

13. The method for depolluting and regenerating a catalytic fuel-cell electrode according to Claim 12, **characterised in that** the duration of the decrease in hydrogen flow is adjusted to achieve a threshold anodic potential of the catalytic electrode at least higher than 0.9 V.

14. The method for depolluting and regenerating a catalytic fuel-cell electrode according to Claim 13, **characterised in that** the decrease in hydrogen flow is maintained for at least about one minute and less than about ten minutes.

15. The method for depolluting and regenerating a catalytic fuel-cell electrode according to any of Claims 7 to 11, **characterised in that** the polluting species is a species that contains carbon and possibly being carbon monoxide.

16. The method for depolluting and regenerating a catalytic fuel-cell electrode according to any of the preceding claims, **characterised in that** it comprises the following steps in succession:

   - a decrease in fuel flow from a nominal value corresponding to a first stoichiometric value, for a first length of time, causing the potential of said catalytic electrode to pass from an initial value to a first value higher than or equal to the oxidation potential of the polluting species;
   - an increase in fuel flow corresponding to a second stoichiometric value, for a second length of time, in order to accelerate the flow of fuel toward the catalytic sites of the anode;
   - return of the flow to said nominal operating value for the reaction of the fuel to the catalytic electrode.

17. The method for depolluting and regenerating a catalytic fuel-cell electrode according to Claim 16, **characterised in that** the first length of time and the second length of time are about a few minutes.

18. The method for depolluting and regenerating a catalytic fuel-cell electrode according to either of Claims 16 or 17, **characterised in that** the first stoichiometric value is about equal to 0.5, the second stoichiometric value being about equal to 2.

FIG.1a

FIG.1b

EP 2 732 497 B1

FIG.2

FIG.3

FIG.4

FIG.5a

FIG.5b

**RÉFÉRENCES CITÉES DANS LA DESCRIPTION**

**Documents brevets cités dans la description**

- US 20060249399 A1
- US 20080026268 A
- US 20100233554 A

**Littérature non-brevet citée dans la description**

- **M.-V. MATHIEU ; M. PRIMET.** *Applied Catalysis,* 1984, vol. 9 (3), 361-370
- **F.H. GARZON ; T. ROCKWARD ; I.G. URDAMPILLETA ; E.L. BROSHA ; F.A. URIBE.** *ECS Trans.,* 2006, vol. 3 (1), 695-703
- **I.G. URDAMPILLETA ; F.A. URIBE ; T. ROCKWARD ; E.L. BROSHA ; B.S. PIVOVAR ; F.H. GARZON.** *ECS Trans.,* 2007, vol. 11 (1), 831-842
- **D. IMAMURA ; Y. HASHIMASA.** *ECS Trans.,* 2007, vol. 11 (1), 853-862